# EUROPEAN PATENT APPLICATION

(11) **EP 0 945 334 A2**
(43) Date of publication of application: **29.09.1999**
(21) Application number: 99101357.4
(22) Date of filing: 26.01.1999
(51) Int. Cl.: B62K 21/00, B62K 17/00, B62K 3/02

(54) **Bicycle with front driving wheel and rear steering wheel**

(30) Priority: 25.03.1998 IT MI980613
(71) Applicant: Romeo, Antonio, 20147 Milano (IT)
(72) Inventor: Romeo, Antonio, 20147 Milano (IT)
(74) Representative: Zavattoni, Maria Chiara

(57) **Abstract**

A bicycle (10) comprises a frame (12), a pedal crankset (32), a front driving wheel (14) connected to the crankset by means of a chain drive, and a rear steering wheel (16) connected to a steering control set at the front. The rear steering wheel has a reduced diameter. The steering control system comprises a shaft which rotates inside the top tube (18) and is connected to a shaft of the rear fork (24) by means of a bevel gear pair. At the end opposite to the bevel gear pair, the steering control (45) comprises a handlebar which is integral with the rotating shaft. Steering of the rear wheel is controlled by inclining the handlebar on the right or on the left.

## Description

A wide variety of types of bicycle have been devised over time, each of which for particular purposes. The bicycles currently in most widespread use have a rear driving wheel, connected to a crankset by means of a chain drive, and a front steering wheel, controlled directly by means of a handlebar. These bicycles which are currently available have been optimized from a dimensional standpoint; nevertheless, a bicycle of the usual type is unlikely to be shorter than 1.60 m, and indeed has frequently larger dimensions. Even though this length may be desirable from the stability point of view, it nonetheless represents a drawback when the bicycle needs to be transported, for example, in a vehicle or else in a lift.

Various types of foldable bicycles have been devised, which enable a reduction in the overall length of the bicycle itself when not in use. Such bicycles generally are made up of a front part and a rear part, which are joined together by means of a hinge and can be locked together. However, the operations of releasing the bicycle from the locked position, folding the bicycle, re-locking the bicycle in the folded condition, and vice versa unblocking the bicycle, assembling it in the position of use, and blocking it in that position are relatively long and complex. In addition, these bicycles are made with wheels of small diameter, and this at the expense of stability.

The inventor has set himself the aim of building a bicycle of relatively compact longitudinal dimensions, which is at the same time stable. A further aim is to build a bicycle that may be attractive or amusing on account of its particular structure.

The above aims have been achieved with a bicycle as defined in Claim 1. Further new and advantageous characteristics are said in the subsequent claims.

In other words, the new bicycle comprises a frame; a front wheel and a rear wheel on the frame; a pedal crank set associated with the front wheel so that it can drive the latter by means of a drive system, generally a chain drive; and a steering system which controls steering of the fork of the rear wheel, from a steering control member on the front part of the frame.

The steering control member is preferably a handlebar which controls a longitudinal shaft which turns about its own axis and is received within a top tube or crossbar of the bicycle, and is equipped at its rear end with a rotation transmission means, generally a pinion of a bevel gear pair, of which the driven member is integral with the rear fork on which the rear wheel is mounted. The bevel gear pair may have a drive ratio of 1:1, or else the drive ratio may be different in order to enable gear reduction. In order to steer, the handlebar must be inclined to one side or the other.

In the new bicycle, the front wheel is of a size basically similar to that of the wheels of a normal man's bicycle or woman's bicycle available on the market today. The rear wheel, instead, is of reduced size as compared to the size of a wheel for a normal bicycle at present available on the market, namely in the region of 35 to 40 cm. Consequently, the new bicycle may be built so that it presents a contained longitudinal dimension, i.e., just a little longer than the sum of the diameters of the two wheels, so that it is easier to transport. At the same time it is stable and can be used by anybody.

An unrestrictive exemplary embodiment of the new bicycle is shown in the attached drawings, where:
Figure 1 is a left side elevational view of the bicycle of the invention;
Figure 2 is the detail of the rear steering box, shown in part in sectional view taken on a vertical plane;

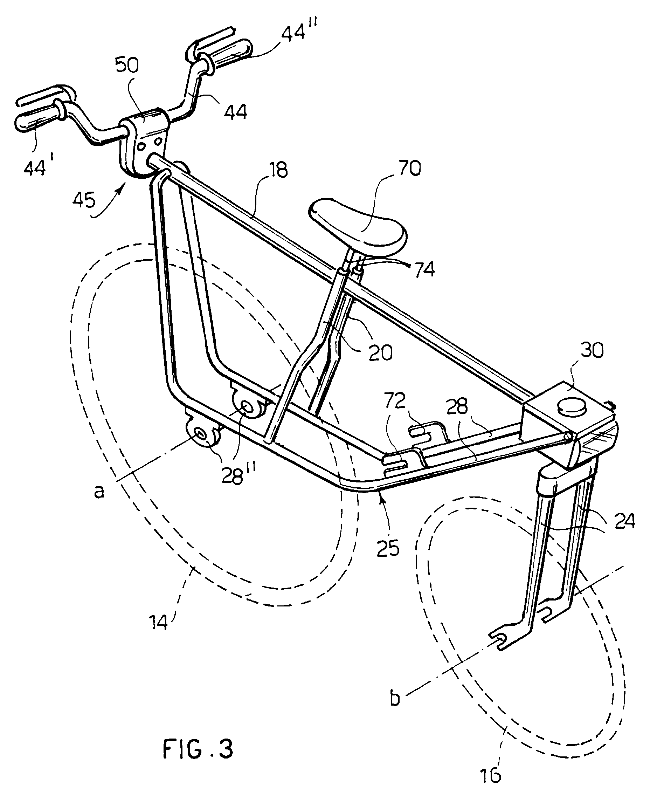

Figure 3 is a perspective top view of the bicycle of Fig. 1; a number of items have been omitted in order to enable a clearer illustration of the underlying items;
Figure 4 is an elevational broken-away rear view of the saddle and of the elements supporting it;
Figure 5 is a top plan view of the front driving wheel assembly with the mudguard removed and the frame interrupted;
Figure 6 is a sectional view according to the plane indicated by 6-6 in Fig. 1.

With reference to the figures, the bicycle of the invention is designated as a whole with reference number 10. The bicycle 10 comprises a frame 12, a front wheel 14 with axis a, and a rear wheel 16 with axis b. The frame comprises a top tube 18, a seat support 20, a rear fork 24, and a lower frame part 25, which comprises two tubular elements 28 set at a certain distance apart and connected by bridges. The top tube 18, the lower frame part 25, and the rear fork 24 converge in a rear box 30.

A pedal crankset 32 has its axis c coinciding with the axis a of the front wheel and has its fixed parts integral with the part 25 of the frame.

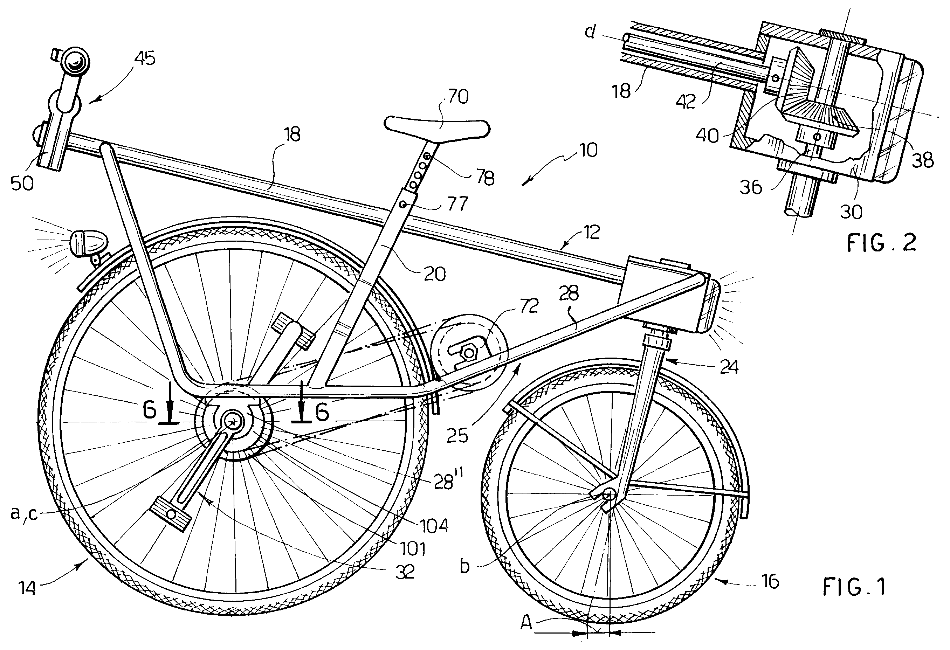

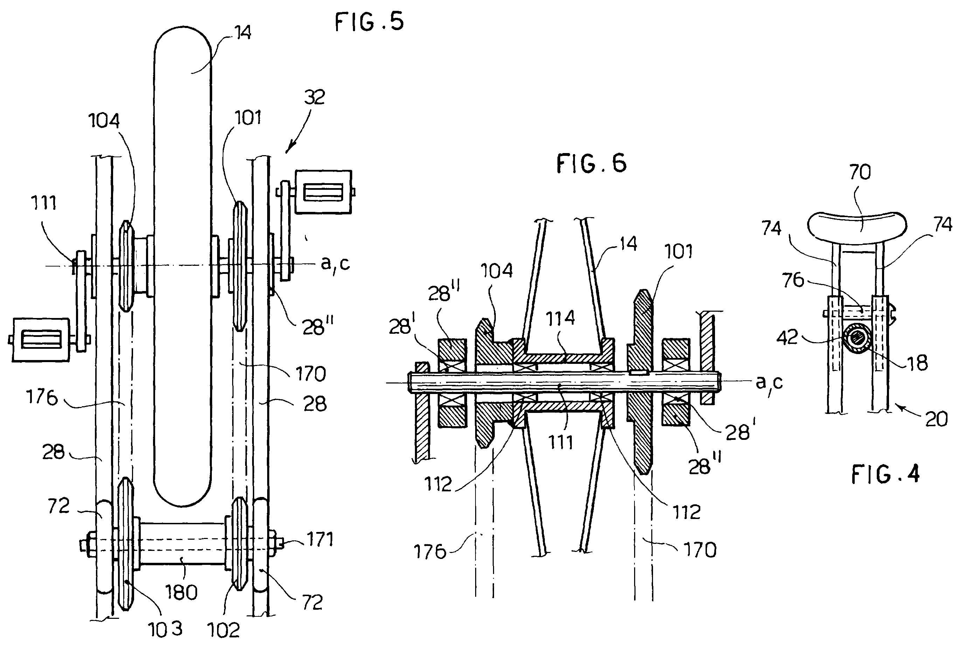

In the bicycle 10, the front wheel 14 is a driving wheel, and is associated with the crankset by means of a chain drive, which in Fig. 1 is only sketched in. A preferred chain drive will be described with reference to Figs. 5 and 6.

The rear wheel 16 is made as a steering wheel by means of the rear fork 24 being mounted on a shaft 36 which, as may be seen from the cross sectional view of box 30 in Fig. 2, carries a driven gear 38 of a bevel gear pair. The driven gear mates with a driving bevel gear 40 mounted on a shaft 42 with axis d, which extends longitudinally in the top tube 18 and is rotatably supported inside the latter. By suitable sizing of the bevel gear pair, it is possible to obtain a desired drive ratio between the shaft 42 and the shaft 36. Preferably the axes of the fork 24 and of the shaft 42 are at right angles. Preferably the axis of the fork has a inclination and a position such as to provide a trail A of from 3 to 6 cm. (By "trail" is meant the distance on a horizontal plane between the point of intersection of the prolongation of the fork axis and the foot of a vertical line through the axis of the wheel).

At the front end, on the steering shaft 42 a steering control 45 is mounted. The steering control comprises a handlebar, referenced 44. The handlebar 44 has handle grips 44' and 44'' on either end, and a body 50 which is integral with the steering shaft 42. The rear wheel is steered by inclining the handlebar on one side or on the other with respect to a neutral position shown in Figs. 1 and 2.

A saddle 70 (Fig. 4) is integral with two perforated posts 74, the two posts being slidable inside tubes that make up the seat support 20, for adjusting the height of the saddle. The saddle-supporting tubes are set on either side of the top tube 18. A fixing screw 76 engages holes 77 in the seat support 20 and holes 78 in the posts 74 to fix the saddle in position at a pre-set height.

Since the rear wheel 16 has a considerably smaller diameter than that of a traditional wheel, and owing to the fact that the structure of the frame is particularly compact, the bicycle 10 may be built with a maximum length not exceeding approximately 140 cm.

Preferably, as is illustrated in Figs. 5 and 6, the control is not directly from the pedal crankset axle to the wheel hub, but rather the axle 111 of the crankset is mounted idle, not only by means of bearings 28' in the supports 28'' that are integral with the frame, but also by means of bearings 112 inside the wheel hub, referenced 114. The transmission of movement takes place through a system comprising gears or sprocket wheels and chains, which includes a sprocket wheel 101, with a number of teeth Z₁, mounted on the pedal crank axle on the right had pedal side, and connected by means of a chain 170 to an intermediate sprocket wheel 102 which is a free wheel, with a number of teeth Z₂. This sprocket wheel 102 is keyed on a auxiliary (commercially available) hub 180, which is rotatable on axle 171 fixed by nuts on the lower frame 25 by means of supports 72. The hub 180 bears a further sprocket wheel 103, integral therewith, said sprocket wheel having number of teeth Z₃, and driving a driven sprocket wheel 104 (having a number of teeth Z₄), by means of a second chain 176, preferably equal to the first chain. Said driven sprocket wheel is integral with the hub 114 of the wheel 14. A drive ratio between the shaft of the crankset and the hub of the wheel depends on Z₁, Z₂, Z₃, and Z₄, and these may be chosen during the manufacturing phase or when the bicycle is assembled in order to achieve an adequate drive ratio. Preferably, Z₁ = Z₃, and Z₂ = Z₄ (equal chains).

Instead of the auxiliary hub 180, a so-called per se known "hub gear" device may be mounted, so that the output sprocket wheel 103 may have an angular velocity lower than that of the input sprocket wheel 102. The device can be mounted without the need for taking down the front driving wheel. The axle 171 is fixed by means of nuts to the supports 72 (Figures 1 and 2), which enable adjustment of axle position. The intermediate sprocket wheel 102 is the input sprocket wheel of the gear change device (and is also a free wheel), and the intermediate sprocket wheel 103 is mounted on the output, i.e., on the hub gear-change outer shell or casing. In this way, the ratio between the revolutions of the sprocket wheel 102 and the revolutions of sprocket wheel 103 may be varied within the limits of the gear change 180.

With the adoption of simple devices (not shown in the figures), the direct crankset-driving wheel transmission is made possible, this being advantageous not only in the event of the chain breaking, but also to overcome steep slopes when the gear change is not mounted.

It will be noted that the embodiment illustrated herein uses components that are available on the market, a fact which contributes to containing production costs.

## Claims

1. Bicycle comprising a front wheel (14), a rear wheel (16), a frame (12) carried by the said wheels, a pedal crankset (32) for moving a wheel, and a steering system, characterized in that said front wheel (14) is a driving wheel ad said rear wheel (16) is a steering wheel, which is controlled by the steering system.

2. Bicycle according to Claim 1, characterized in that the pedal crankset (32) is carried on the frame and is rotatable about a axis (c) coinciding with the axis (a) of the front driving wheel.

3. Bicycle according to Claim 2, characterized in that an axle shaft (111) of the crankset is rotatable with respect to a hub (114) of the driving wheel and is associated with the hub by means of a system comprising sprocket wheels and chains.

4. Bicycle according to Claim 1, characterized in that the rear steering wheel (16) is associated with a rear fork (24), and the steering system comprises a front steering control assembly (45), a steering control shaft (42) rotatably received in a top-tube (18) part of the frame (12), and a bevel gear pair (38, 40) to transmit rotational movement from the said steering control shaft (42) to the rear fork (24).

5. Bicycle according to Claim 4, characterized in that the said bevel gear pair (38, 40) comprises a pinion (40) on the said steering control shaft (42), and a pinion (38) on a fork shaft (36).

6. Bicycle according to Claim 4, characterized in that the said steering control assembly (45) comprises a control handlebar (44) engaging said steering control shaft (42) so as to turn the shaft (42) about its longitudinal axis (d).

7. Bicycle according to Claim 3, characterized in that the system for transmission of movement from the axle (111) of the crankset to the hub (114) of the driving wheel comprises two pairs of sprocket wheels (101, 102, 103, 104) and two equal chains (170, 176) of pre-set dimensions to obtain a certain drive ratio.

8. Bicycle according to Claim 3, characterized in that the system for transmission of movement from the crankset axle (111) to the hub (114) of the driving wheel comprises two chains (170, 176) and two pairs of sprocket wheels (101, 102, 103, 104), and a so-called "hub change" gear-change device, the driven sprocket wheel of the said first chain being mounted on the input of the said gear change, and the driving sprocket wheel of the second chain being mounted on the output of the said gear change, the axle of which is fixed to the frame.

9. Bicycle according to Claim 4, in which the drive ratio of the bevel gear pair enables a gearing down between the angle of rotation of the steering shaft (42) and the angle of rotation of the shaft (36) of the fork.
